# EUROPÄISCHE PATENTANMELDUNG

(11) **EP 0 966 877 A1**
(43) Veröffentlichungstag der Anmeldung: **29.12.1999**
(21) Anmeldenummer: 99110500.8
(22) Anmeldetag: 31.05.1999
(51) Int. Cl.: A01D 34/76, A01D 34/82

(54) **Mähdeck und Abdeckelement**

(30) Priorität: 26.06.1998 US 105828
(71) Anmelder: DEERE & COMPANY, Moline, Illinois 61265-8098 (US)
(72) Erfinder: Benter, Dean William, Horicon, Wisconsin 53032 (US); Kuhn, John Boyd, Rubicon, Wisconsin 53078 (US); Forest, Richard Lee, Colona, Illinois 61241 (US)
(74) Vertreter: Magin, Ludwig Bernhard

(57) **Zusammenfassung**

Bekannte Mähgeräte, insbesondere Sichelmähgeräte, weisen üblicherweise unter einem Mähdeck angeordnete Mähblätter auf, die mittels eines oberhalb des Mähdecks angeordneten Riemenantriebs mit Riemenscheiben und Riemen angetrieben werden. Um Verletzungen einer Bedienungsperson vorzubeugen, sind an dem Mähdeck Abdeckelemente vorgesehen, die die Riemenscheiben und den Riemen zumindest teilweise überdecken.

Es wird ein Mähdeck (12) mit einem Abdeckelement (28, 128, 228, 328) vorgeschlagen, das leicht, schnell und vorzugsweise ohne die Zuhilfenahme von Werkzeugen an einem Mähdeck (12) angebracht werden kann.

Mähdecks und Abdeckelemente werden an Mähgeräten, beispielsweise in der Sportplatz- und Gartenpflege, eingesetzt.

## Beschreibung

Die Erfindung betrifft ein Mähdeck, vorzugsweise ein Sichelmähdeck, mit einer Abdeckung mit einem oder mehreren Halteelement(en) und mit zumindest einem auf die Abdeckung aufsetzbaren Abdeckelement mit einem oder mehreren, mit dem/den Halteelement(en) korrespondierenden Haltemittel(n) und ein Abdeckelement.

Mähdecks, die zum Schneiden von Gras und ähnlicher Vegetation eingesetzt werden, weisen üblicherweise eine Mehrzahl von Mähmessern auf, die durch einen Riemenantrieb angetrieben werden, der an der Oberseite des Mähdecks angeordnet ist. Die Riemen sind um Scheiben oder Riemenscheiben gewunden, welche wiederum Wellen und an diese jeweils angebrachte Mähmesser antreiben. Die Riemen werden üblicherweise mittels eines durch eine Zapfwelle angetriebenen Getriebes oder eines Fahrzeugriemenantriebs angetrieben. Um die von dem Riemenantrieb ausgehende Verletzungsgefahr zu minimieren, sind an den Mähdecks üblicherweise Abdeckelemente vorgesehen, die die Eingriffsbereiche der Riemenscheiben mit dem Riemen zumindest teilweise überdecken. Diese Abdeckelemente sind üblicherweise lösbar auf dem Mähdeck angebracht, um sie beispielsweise zu Wartungszwecken entfernen und nach Abschluß der Arbeiten wieder aufsetzen zu können. Hierzu weisen bekannte Mähdecks verschiedene Befestigungsmittel beispielsweise in Form von Verschraubungen, wie sie beispielsweise an einem John Deere Model 54 Mulcher Compatible Mower Deck gesehen werden können, oder Schnallen, wie es beispielsweise an einem John Deere Model 72 Mower Deck zu sehen ist, auf.

Das der Erfindung zugrunde liegende Problem wird darin gesehen, daß die Handhabung und Funktion bekannter Mähdecks und Abdeckelemente nicht zufriedenstellend ist.

Dieses Problem wird erfindungsgemäß durch die Lehre der Patentansprüche 1 bzw. 9 gelöst, wobei in den weiteren Patentansprüchen die Lösung in vorteilhafter Weise weiterentwickelnde Merkmale aufgeführt sind.

Auf diese Weise kann das Abdeckelement auf die Abdeckung aufgesetzt und positioniert werden, ohne daß hierzu ein Einsatz von Werkzeugen erforderlich ist. Das oder die Haltemittel und das oder die Halteelemente sind mit der Abdeckung bzw. dem Abdeckelement in einer räumlich festgelegten Stellung verbunden, so daß sie nicht gesondert zu der oder während der Montage des Abdeckelements auf der Abdeckung angebracht werden müssen, wodurch Probleme mit korrodierten bzw. schwer zu lösenden Befestigungsmitteln vermieden werden können. Beispielsweise können sie auf die jeweilige Unterlage aufgeschweißt, mit dieser verklebt oder auch direkt in diese eingeformt sein. Darüber hinaus sind sie als Formschlußelemente ausbildet, von denen ein erstes Paar zur Führung des Abdeckelements in einer ersten Stellung miteinander in Eingriff gebracht werden kann, wodurch eine erste Lageausrichtung des Abdeckelements bezogen auf die Abdeckung vorgenommen wird. Während der Montage wird das Abdeckelement von seiner ersten Stellung in eine zweite Stellung gebracht, beispielsweise entlang der Oberfläche der Abdeckung verschoben, wobei es hierbei durch das Paar von sich miteinander in Eingriff befindenden Formschlußelementen geführt wird. Die Verschiebebewegung kann sowohl entlang einer linearen als auch auf einer kreisförmigen oder abweichend gestalteten Bahn erfolgen. Durch zumindest zwei weitere Formschlußelemente kann das Abdeckelement auf der Abdeckung in zumindest einer zweiten Stellung gesichert werden. Es ist aber auch denkbar, daß das Abdeckelement in unterschiedlichen Stellungen auf der Abdeckung gesichert werden kann. Ein Haltemittel bzw. ein Halteelement kann durch jeweils ein Formschlußelement gebildet werden. Es ist aber auch möglich, daß zwei oder mehr Formschlußelemente zu einem Haltemittel bzw. einem Halteelement zusammengefaßt sind. Das Abdeckelement dient vorzugsweise zur zumindest teilweisen Abdeckung eines an der Oberseite eines Mähdecks angebrachten Riemenantriebs, es kann aber auch zur Abdeckung anderer Baugruppen oder zur Abdeckung von Aussparungen, beispielsweise von Wartungsöffnungen vorgesehen sein. Eine erfindungsgemäße Anordnung eignet sich besonders bei einem häufigen An- und Abbauen eines Abdeckelements zu Wartungs- oder sonstigen Zwecken oder auch, wenn der abzudeckende Bereich schlecht zugänglich ist, so daß ein Halten des Abdeckelements durch übliche Befestigungsmittel, wie beispielsweise durch Schrauben, nicht vorgesehen werden kann. Darüber hinaus minimiert eine solche Anordnung die Gefahr, daß sich herabhängende Äste oder ähnliches in den Haltemitteln bzw. Halteelementen verfangen und diese dadurch beschädigt oder unbeabsichtigt geöffnet werden.

Eine gleichmäßige Anlage des Abdeckelements an der Abdeckung wird gefördert, wenn an dem Abdeckelement zwei oder mehrere Haltemittel bzw. Halteelemente vorgesehen sind, die zumindest teilweise wenigstens annähernd gleichmäßig beabstandet sind. Es kann vorgesehen sein, daß die Haltemittel sich in angebautem Zustand jeweils mit einem Halteelement an der Abdeckung in Eingriff befinden. Es ist aber auch denkbar, daß das Abdeckelement in verschiedenen Stellungen, beispielsweise in Anpassung an eine bestimmte Riemenführung, auf die Abdeckung aufgesetzt werden kann und/oder sich nicht immer alle Haltemittel in Eingriff mit entsprechenden Halteelementen befinden.

Das/die Haltemittel und das/die Halteelemente sind so ausgebildet, daß sie in Eingriff gebracht werden können und dann als Führung dienen. Dies kann beispielsweise dadurch realisiert, werden, daß entweder ein Haltemittel oder ein Halteelemente als von seiner jeweiligen Unterlage abstehendes Element ausgebildet ist, das einen Schaft oder einen Schaft mit einem vergrößerten Kopfbereich aufweist, und der jeweils andere Bauteil beispielsweise durch eine Ausnehmung oder eine Aussparung gebildet wird. Diese Ausnehmung bzw. Aussparung kann beispielsweise Bereiche mit unterschiedlicher Weite aufweisen, so daß der Kopfbereich in einen Bereich eingeführt werden kann und durch ein Verschieben in einen Bereich mit geringerer Weite gelangt, in dem er gehalten wird. Es ist aber auch denkbar, die Aussparung zumindest einenends offen auszuführen, so daß der Schaft direkt eingeführt werden kann oder daß das In-Eingriff-Bringen über ein Schrägstellen der Unterlage und ein Einfädeln des Kopfbereichs erfolgt. Das den Schaft und Kopfbereich aufweisende Element kann in der Art eines Schrauben- oder Bolzenoberteils oder auch als ein beispielsweise "L"-förmiges Bauteil ausbildet sein. Das mit dem ersten Element zusammenwirkende Bauteil muß nicht durch eine Ausnehmung oder Aussparung gebildet werden, es kann beispielsweise auch in der Art einer Schiene ausgebildet sein. Um das Abdeckelement zu sichern, können die Haltemittel bzw. die Halteelemente Sicherungsmittel beispielsweise in Form bekannter Festlegemittel, wie Keile, Federringe o. ä., die sich beispielsweise durch Öffnungen in den Haltemitteln bzw. den Halteelementen erstrecken können, aufweisen. Es ist aber denkbar, in die Haltemittel bzw. Halteelemente integrierte Formschlußelement beispielsweise in Form vorzugsweise federnder Sperrmittel vorzusehen, wodurch das Mitführen eines zusätzlichen Festlegemittels überflüssig wird.

Zur Überdeckung einer Aussparung in der Abdeckung kann das Abdeckelement nur einen vorzugsweise annähernd eben ausgebildeten zentralen Bereich aufweisen. Soll das Abdeckelement allerdings ein Bauteil oder eine Baugruppe abdecken, weist es vorzugsweise zusätzlich einen sich dazu zumindest im wesentlichen senkrecht erstreckenden Wandbereich auf, der sich an den zentralen Bereich anschließt und der beispielsweise zur Abdeckung einer Riemenscheibe eines Riemenantriebs ebenfalls vorzugsweise annähernd eben ausgebildet ist.

Ist das Haltemittel in dem Wandbereich oder in einem an den Wandbereich anschließenden Flanschbereich angeordnet, so ist es außerhalb bzw. am Rande des abzudeckenden Bereichs angeordnet und stellt auf diese Weise keine Behinderung der abzudeckenden Bauteile, Baugruppe oder Aussparung dar.

Der Umriß des Abdeckelements kann an die Anforderungen des abzudeckenden Bauteils angepaßt werden. Soll beispielsweise eine Riemenscheibe oder ein Zahnrad zumindest teilweise überdeckt werden, so ist das Abdeckelement vorzugsweise zumindest bereichsweise rund ausgebildet.

Weist das Abdeckelement in seinem zentralen Bereich zumindest eine Ausnehmung auf, so kann hierdurch beispielsweise der Zugang zu einer Schmierstelle an dem darunter abgedeckten Bauteil ermöglicht werden.

Das Abdeckelement kann aus unterschiedlichen Materialien bestehen. Diese sind vorzugsweise flexibel, so daß eine vereinfachte Montage des Abdeckelements, beispielsweise an schlecht zugänglichen Stellen, oder wenn das Abdeckelement eine gewisse Vorspannung bezogen auf die Abdeckung aufweisen soll, erfolgen kann. Besonders witterungsbeständig und auch geeignet, um das/die Halteelemente bzw. das/die Haltemittel direkt in das Abdeckelement einzuformen, ist allerdings eine Ausführung aus einem Kunststoffmaterial. Auch das Mähdeck selbst kann aus einem Kunststoffmaterial bestehen, um Korrosion vorzubeugen, da Mähdecks oftmals unter feuchten Bedingungen eingesetzt werden.

Ein Abdeckelement, das derart ausgebildet ist, daß es auf ein zuvor beschriebenes Mähdeck aufgesetzt werden kann, kann an verschiedenen Typen von Mähdecks eingesetzt werden, wenn an diesen entsprechend ausgebildete Halteelemente vorgesehen sind.

In der Zeichnung sind vier nachfolgend näher beschriebene Ausführungsbeispiele der Erfindung dargestellt. Es zeigt:
- Fig. 1: eine Draufsicht auf ein Mähdeck mit drei erfindungsgemäßen Abdeckelementen,
- Fig. 2: eine vergrößerte, perspektivische Darstellung des größeren der drei Abdeckelemente aus Fig. 1,
- Fig. 3: eine vergrößerte, perspektivische Darstellung eines der kleineren Abdeckelemente aus Fig. 1,
- Fig. 4: eine perspektivische Darstellung eines ersten Ausführungsbeispiels eines Haltemittels und eines Halteelements zur Befestigung des Abdeckelements auf dem Mähdeck,
- Fig. 5: eine perspektivische Darstellung eines ersten Ausführungsbeispiels eines Halteelementes und eines Haltemittels zur Sicherung des Abdeckelements auf dem Mähdeck,
- Fig. 6: ein zweites Ausführungsbeispiel eines erfindungsgemäßen Abdeckelements,
- Fig. 7: ein drittes Ausführungsbeispiel eines erfindungsgemäßen Abdeckelements und
- Fig. 8: ein viertes Ausführungsbeispiel eines erfindungsgemäßen Abdeckelements.

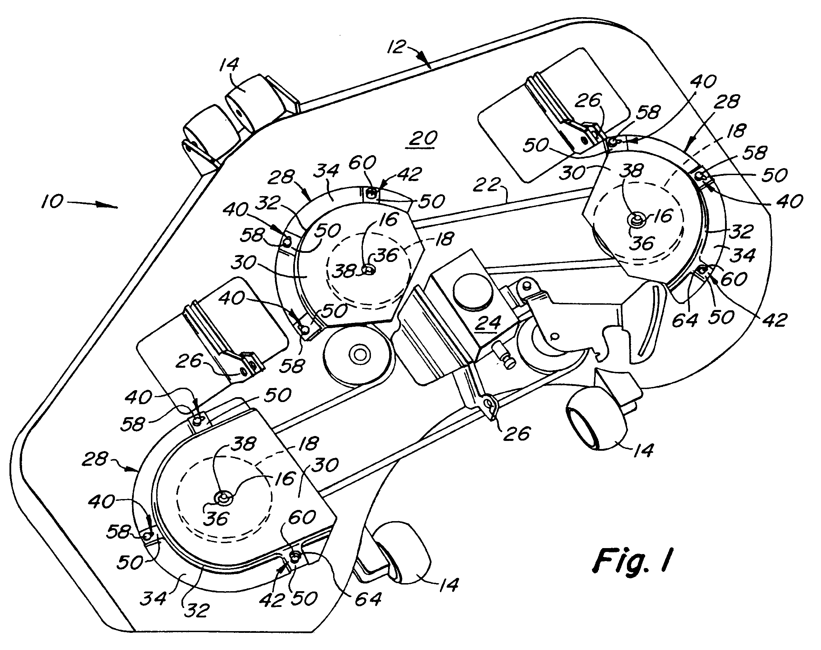

Zuerst wird Fig. 1 betrachtet, in der ein Mähgerät des Typs gezeigt wird, an welchem die vorliegende Erfindung eingesetzt werden kann. Das Mähgerät 10 ist eine Mehrwelleneinheit, die drei Mähblätter (nicht gezeigt) umfaßt, die unter einem Mähdeck 12 getragen werden. Das Mähdeck 12 umfaßt an seinen vorderen und rückwärtigen Eckbereichen Spurräder 14, die ein Eingreifen in die Oberfläche verhindern. Die Mähblätter sind an Wellen 16, die an dem Mähdeck 12 angebracht sind, befestigt. Riemenscheiben 18 sind mit den Wellen 16 oberhalb der oberen Abdeckfläche oder Abdeckung 20 des Mähdecks 12 verbunden, und ein Riemen 22 ist um die Riemenscheiben 18 geführt, um die Mähblätter anzutreiben. Der Riemen 22 wiederum wird über ein Getriebegehäuse 24 angetrieben, das durch die Zapfwelle eines nicht gezeigten Fahrzeugs, das daran angepaßt ist, das Mähdeck 12 zu stützen und zu tragen, angetrieben wird.

Das Fahrzeug würde einen Rahmenzusammenbau tragen, der an schwenkbaren Verbindungen 26 an vorderen und rückwärtigen Bereichen des Mähdecks 12 angreifen würde. Der Rahmenzusammenbau würde es einer Bedienungsperson erlauben, das Mähdeck 12 über den Grund zu heben und es auch um eine Achse durch seine rückwärtige, schwenkbare Verbindung 26 zu drehen, um einen Zugang zu den Mähblättern und anderen Bauteilen unterhalb des Mähdecks 12 zu gestatten. Der Rahmenzusammenbau würde oberhalb des Riemenantriebs in den Gebieten getragen, die im allgemeinen nicht durch Rundelemente oder Abdeckelemente 28 abgedeckt werden, die auf dem Mähdeck 12 vorgesehen sind, und dadurch dazu dienen, einen unbeabsichtigten Zugang zu dem Riemenantrieb während eines Betriebs zu verhindern. Entsprechend werden nur die Gebiete, die dicht an die Riemenscheiben 18 und den Riemen 22 angrenzen und die von den Seiten und von der Frontseite des Rahmenzusammenbaus ausgehen, durch die Abdeckelemente 28 abgedeckt.

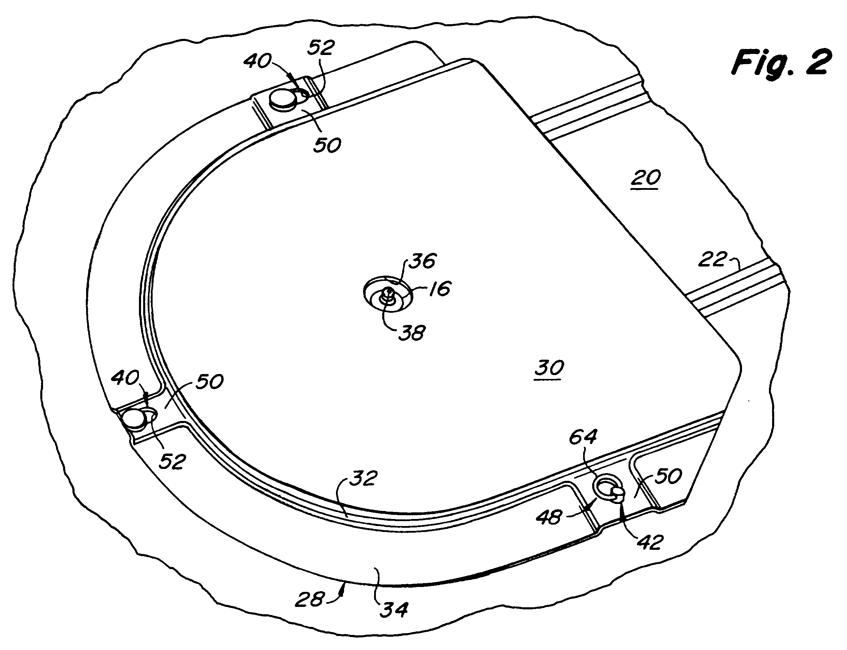

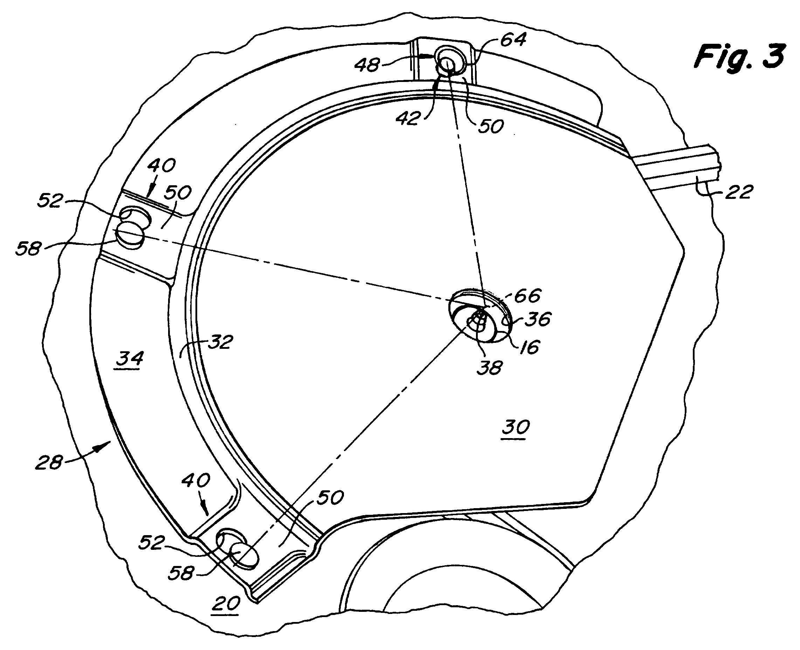

Werden ebenfalls die Figuren 2 und 3 betrachtet, so zeigt sich, daß zwei Versionen der bevorzugten Ausführungsform des Abdeckelements 28 vorgesehen sind. Das Abdeckelement 28 in Figur 2 hat eine in etwa rechteckige Struktur und ist daran angepaßt, die Riemenscheiben 18 und einen Teilbereich des Riemens 22 an der linken Seite des Mähdecks 12 zu umschließen, wie es aus Figur 1 ersehen werden kann. Das Abdeckelement 28 aus Figur 3 weist die Form einer Scheibe auf, ist etwas kleiner und deckt ebenfalls die Riemenscheibe 18 und einen Teilbereich des Riemens 22 ab. Dieses Abdeckelement 28 ist an den vorderen und rechten Seiten des Mähdecks 12 vorgesehen.

Beide Arten der Abdeckelemente 28 umfassen einen zentralen Bereich 30 von solch einer Größe, um eine Riemenscheibe 18 im wesentlichen abzudecken. An den zentralen Bereich 30 jedes Abdeckelements 28 ist ein im allgemeinen vertikaler Wandbereich 32 angeschlossen, der sich nach unten erstreckt. Der Wandbereich 32 erstreckt sich in etwa um eine Hälfte des Umkreises jedes zentralen Bereichs 30 und ist an im allgemeinen flachen Flanschbereichen 34 angebracht. Das Abdeckelement 28 öffnet sich nach einer Seite, um es dem Riemen 22 zu erlauben, in die Riemenscheibe 18 einzutreten und aus ihr auszutreten. Jedes Abdeckelement 28 schließt auch eine sich vertikal erstreckende Öffnung oder Ausnehmung 36 in seinem zentralen Bereich 30 ein, die einen Zugang zu einem an der Welle 16 vorgesehenen Schmiernippel 38 erlaubt.

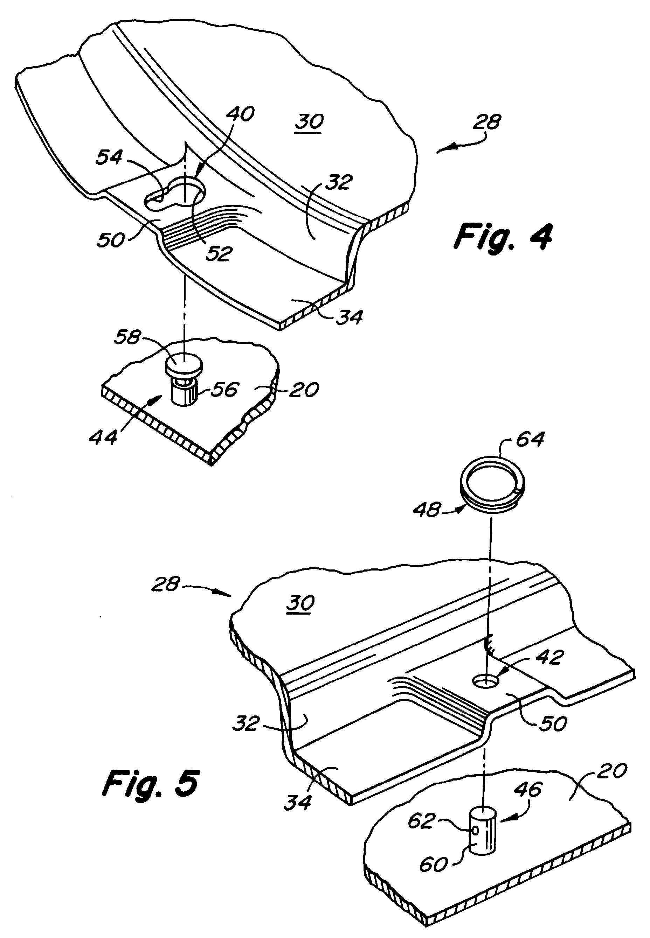

Werden auch die Figuren 4 und 5 betrachtet, so werden dort die Mittel zur Sicherung des Abdeckelements 28 an dem Mähdeck 12 detaillierter dargestellt. Diese Mittel schließen eine Mehrzahl voneinander beabstandeter Öffnungen oder Haltemittel 40 und 42, die sich durch die Flanschbereiche 34 erstrecken, um eine Mehrzahl abstehender Stiftelemente oder Halteelemente 44 und 46 aufzunehmen, die von dem Mähdeck 12 getragen werden und von diesem nach oben abstehen, und ein Sicherungsmittel 48 ein, um das Abdeckelement 28 an seinem Platz zu sichern.

Die Haltemittel 40 und 42 sind in angehobenen Randflächen 50 in den Flanschbereichen 34 vorgesehen und sind im allgemeinen von einem zentralen Punkt in den Abdeckelementen 28 (siehe Fig. 2 und 3) gleich beabstandet. Zwei Arten von Haltemitteln 40 und 42 sind in der bevorzugten Ausführungsform vorgesehen. Die erste Art von Haltemittel 40 umfaßt einen vergrößerten Bereich 52, welcher im allgemeinen rund geformt ist, mit einem daran angeschlossenen länglichen, geschlitzten Bereich. Die zweite Art von Haltemittel 42 ist einfach rund ausgebildet. Wie es in den Figuren 2 und 3 gezeigt wird, ist jedes Abdeckelement 28 mit zwei Haltemitteln 40 mit geschlitzten Bereichen 54 und einem Haltemittel 42 der runden Art versehen.

Die aufrechten Halteelemente 44 und 46 sind an der oberen Abdeckung 20 des Mähdecks 12 befestigt und sind ebenfalls am Umkreis rund um die Antriebsscheibe 18 beabstandet, um in die Haltemittel 40 und 42 in dem Flanschbereich 34 zu passen. Eines der Halteelemente 44 nimmt die Form eines Schafts 56 mit einem an seinem oberen Ende getragenen Kopfbereich 58 an. Ein anderes der Stiftelemente bzw. das Halteelement 46 nimmt die Form eines aufrechten Schafts 60 mit einer sich radial durch ihn erstreckenden Öffnung 62 an. Beide Halteelemente 44 und 46 sind an dem Mähdeck 12 durch Anschweißen oder entsprechende Mittel angebracht.

Das Sicherungsmittel 48 nimmt die Form eines Federringes 64 an, der vorgesehen ist, um in die sich radial erstreckende Öffnung 62 in dem Schaft 60 eingesetzt zu werden, um das Abdeckelement 28 an seinem Platz zu sichern. Treibkeile, Muttern und Gewindezapfen oder ähnliche Mittel können ebenso verwendet werden.

Um das größere Abdeckelement 28, das in Figur 2 gezeigt wird, zu befestigen, sind die vergrößerten Bereiche 52 des ersten Haltemittels 40 in den Flanschbereichen 34 über den Kopfbereichen 58 der Halteelemente 44 angeordnet, und das Abdeckelement 28 ist in eine an dem Mähdeck 12 bündig anliegende Stellung abgesenkt und dann in Längsrichtung verschoben worden, um es den Schäften 56 der Halteelemente 44 zu erlauben, in die länglichen geschlitzten Bereiche 54 zu gleiten. Dann wird die zweite Öffnung bzw. das Haltemittel 42 über dem Schaft 60 angeordnet, um ihm zu erlauben, sich durch das zweite Haltemittel 42 in dem Flanschbereich 34 zu erstrecken, und der Federring 64 wird durch die radiale Öffnung 62 eingesetzt, um das Abdeckelement 28 an dem Mähdeck 12 zu sichern.

Wiederum Figur 3 betrachtend, wird es ersichtlich, daß die länglichen geschlitzten Bereiche 54 in den Abdeckelementen 28 sich umfänglich um einen zentralen Punkt 66 des Abdeckelements 28 erstrecken, so daß, wenn die Kopfbereiche 58 der Halteelemente 44 in den vergrößerten Bereichen 52 sitzen, das Abdeckelemente 28 um wenige Grad um seinen zentralen Punkt 62 gedreht wird, um die geschlitzten Bereiche 54 des Abdeckelements 28 entlang des aufrechten Schafts 56 der Halteelemente 44 zu bewegen und es mit dem Mähdeck 12 zu verbinden.

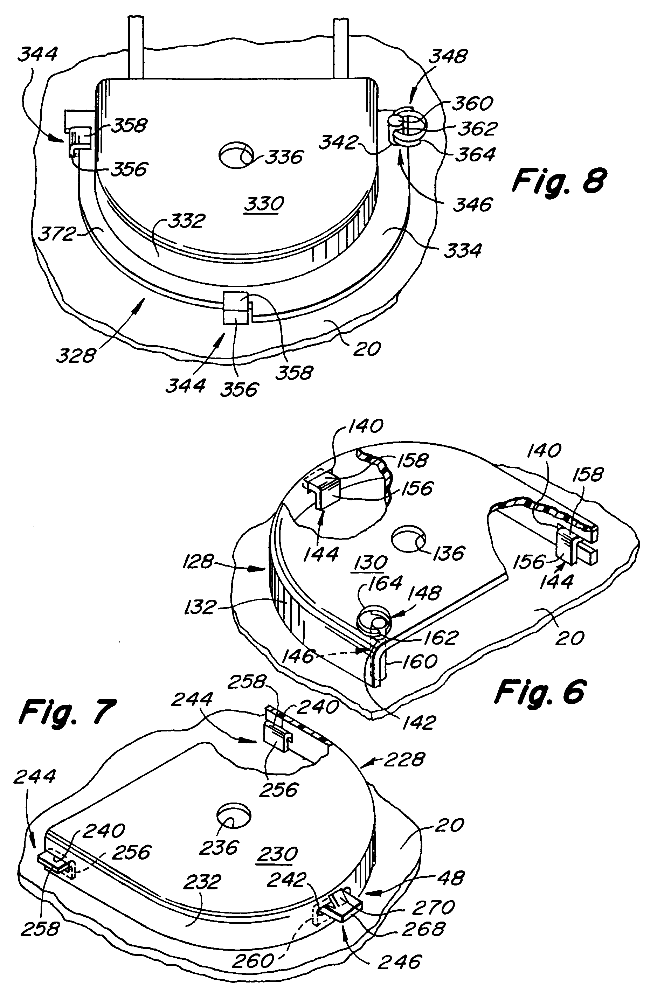

Wird auch Figur 6 betrachtet, welche eine alternative Ausführungsform der vorliegenden Erfindung zeigt, so wird ein abnehmbares Abdeckelement 128 gesehen, das auf einer im allgemeinen flachen oberen Abdeckung 20 eines Sichelmähdecks angeordnet ist. Für dieses Ausführungsbeispiel werden Bezugszeichen verwendet werden, die den Bezugszeichen, die für das bevorzugte Ausführungsbeispiel verwendet wurden, entsprechen, die aber um Einhundert erhöht wurden. Dieses Abdeckelement 128 weist einen zentralen Bereich 130 von einer solchen Größe auf, daß er die Riemenscheibe 18 im wesentlichen abdeckt, und mit einem im allgemeinen vertikalen Wandbereich 132, der sich von dem zentralen Bereich 130 nach unten erstreckt. Es weist jedoch nicht die sich nach außen erstreckenden Flanschbereiche 34 auf, welche an den Wandbereichen 32 des bevorzugten Ausführungsbeispiels angebracht sind.

Die Mittel zur Sicherung des Abdeckelements 128 dieser alternativen Ausführungsform an der oberen Abdeckung 20 des Mähdecks 12 weisen erste geschlitzte Öffnungen oder Haltemittel 140, die sich durch den Wandbereich 132 des Abdeckelements 128 erstrecken, Stiftelemente bzw. Halteelemente 144 und 146, die von der Abdeckung 20 getragen werden und sich von ihr aufwärts erstrecken, und ein Sicherungsmittel 148 zur Sicherung des Abdeckelements 128 an dem Mähdeck 12 auf. Das eine Stiftelement bzw. Halteelement 144 ist in der Form eines "L" ausgebildet, welches an dem Mähdeck 12 angebracht ist und von diesem nach oben absteht. Dieses L-förmige Halteelement 144 weist einen Kopfbereich 158 und einen Schaft 156 auf. Der Kopfbereich 158 kann in die geschlitzte Öffnung bzw. das Haltemittel 140 des Wandbereichs 132 eingesetzt oder von diesem aufgenommen werden. Das zweite Stiftelement oder Halteelement 146 wird in dem Wandbereich 132 des Abdeckelements 128 mit Abstand von dem Halteelement 144 aufgenommen. Dieses Stift-, Anker- oder Halteelement 146 weist einen Schaft 160 auf, welcher an dem Mähdeck 12 angebracht ist und von diesem aufwärts absteht. Ein Sicherungsmittel 148 in Form einer Öffnung 162 durch den Schaft 160 mit einem Federring 164, der durch die Öffnung 162 in den Schaft 160 geführt werden kann, dient dazu, das Abdeckelement 128 an dem Mähdeck 12 zu sichern, wenn der Kopfbereich 158 des einen Stiftelements oder Halteelements 144 in dem ersten Haltemittel 140 aufgenommen worden ist.

Ein Anbringen des Abdeckelements 128 erfordert einfach, daß das Haltemittel 140 in dem Abdeckelement 128 dem Kopfbereich 158 des einen Stiftelements oder Halteelements 144 benachbart angeordnet ist und dann das Abdeckelement 128 entlang des Mähdecks 12 verschoben wird, um die Kopfbereiche 158 in die ersten Haltemittel 140 einzusetzen. Das zweite Haltemittel 142 in dem Abdeckelement 128 würde dann um den Schaft 160 angeordnet und der Federring 164 in die radiale Öffnung 162 eingesetzt werden. Ein Entfernen des Abdeckelements 128 erfordert einfach den umgekehrten Vorgang.

Es wird nun Figur 7 betrachtet, in der noch eine weitere alternative Ausführungsform der vorliegenden Erfindung gezeigt wird. Es werden Bezugszeichen verwendet, die den an der bevorzugten Ausführungsform verwendeten Bezugszeichen entsprechen, wobei diese um 200 erhöht wurden. Diese Ausführungsform weist auch ein im allgemeinen kreisförmiges Abdeckelement 228 mit einem zentralen Bereich 230, der so ausgelegt ist, um die Riemenscheibe im wesentlichen zu überdecken, und einen sich im allgemeinen vertikal und nach unten erstreckenden Wandbereich 232 auf, der mit dem zentralen Bereich 230 verbunden ist. Der Wandbereich 232 weist in dieser Ausführungsform auch eine Öffnung bzw. ein erstes Haltemittel 240 auf, um eines der Halteelemente 244 aufzunehmen. Jedes dieser Halteelemente 244 nimmt die Form eines "L"-Elements mit einem Schaft 256 und einem Kopfbereich 258 an, wobei der Kopfbereich 258 daran angepaßt ist, durch das erste Haltemittel 240 aufgenommen zu werden. Die ersten Haltemittel 240 in dem Wandbereich 232 nehmen die Form von Schlitzen in gegenüberliegenden Seiten des Abdeckelements 228 ein. Das andere Halteelement 246 ist ebenfalls ein "L"-förmiges Element und weist einen hochstehenden Schaft 260 mit einem sich nach außen erstreckenden Vorsprung 268 auf. Dieser Vorsprung 268 ist daran angepaßt, in der zweiten oder geschlitzten Öffnung bzw. dem Haltemittel 242 in dem Wandbereich 232 des Abdeckelements 228 aufgenommen zu werden. Der Schaft 260 ist mit einem Sicherungsmittel 248 versehen, um das Abdeckelement 228 lösbar an dem Mähdeck 12 zu sichern, sobald das Abdeckelement 228 auf dem Mähdeck 12 positioniert ist und das Halteelement 244 in dem ersten Haltemittel 240 aufgenommen wurde. Das Sicherungsmittel 248 nimmt die Form eines Anschlag 270 ein, der durch den Vorsprung 268 auf dem Schaft 260 getragen wird. Wie es in Figur 7 gezeigt wird, ist der Vorsprung 268 so ausgebildet, daß er nach oben federbelastet ist, so daß der Anschlag 270, sobald er durch das zweite Haltemittel 242 in dem Wandbereich 232 eingesetzt wurde, an dem Wandbereich 232 anliegen wird und den Vorsprung 268 daran hindern wird, sich aus diesem durch ein Verschieben wegzubewegen. Um den Vorsprung 268 aus dem zweiten Haltemittel 242 in dem Wandbereich 232 zu entfernen, würde der Vorsprung 268 nach unten gedrückt, um es dem Anschlag 270 zu erlauben, durch das Haltemittel 242 zu gelangen und es dem Abdeckelement 228 zu erlauben, verschoben zu werden, um es dem zweiten Haltemittel 242 zu gestatten von dem anderen Stiftelement bzw. Halteelement 246 entfernt zu werden. Der Vorsprung 268 könnte alternativ in einer steifen Art ausgebildet sein und der Anschlag 270 in einer Weise oder aus solch einem Material ausgebildet sein, das er nach oben federbelastet sein würde, um das gleiche Ergebnis zu erzielen.

Wird nun Figur 8 betrachtet, so ist dort ein zusätzliches Ausführungsbeispiel der vorliegenden Erfindung vorgesehen. Es werden Bezugszeichen verwendet werden, die den Bezugszeichen die für das bevorzugte Ausführungsbeispiel verwendet wurden, entsprechen, wobei diese um Dreihundert erhöht wurden. Das Abdeckelement 328 ist daran angepaßt, auf ein im allgemeinen flaches Mähdeck 12 aufgesetzt zu werden und weist einen zentralen Bereich 330 mit einem im allgemeinen vertikalen Wandbereich 332, der sich von diesem nach unten erstreckt, mit einem damit verbundenen sich nach außen erstreckenden Flanschbereich 334 auf.

Um das Abdeckelement 328 an dem Mähdeck 12 anzubringen, ist ein Sitz bzw. Haltemittel 372 entlang der Oberfläche des Flanschbereichs 334 und ein Paar von Stiftelementen bzw. Halteelementen 344 in der Form von an dem Mähdeck 12 angebrachten L-förmigen Elementen vorgesehen. Jedes der Halteelemente 344 weist einen Kopfbereich 358, der von einer Basis bzw. einem Schaft 356 getragen wird, auf, wobei der Kopfbereich 358 daran angepaßt ist, mit dem Haltemittel 372 in Eingriff zu gelangen, während der Schaft 356 daran entlang gleitet, um den zentralen Bereich 330 zu positionieren. Ein weiteres Stiftelement bzw. ein Haltemittel 346 ist in der Form eines aufrechten Verankerungsmittels oder Schafts 360 vorgesehen, und es erstreckt sich eine Öffnung bzw. ein Haltemittel 342 durch den Flanschbereich 334, um den Schaft 360 aufzunehmen. Ein Sicherungsmittel 348 in der Form einer Öffnung 362 in dem Schaft 360 und ein Federring 364 dienen dazu, das Abdeckelement 328 an seinem Platz zu halten. Um das Abdeckelement 328 an dem Mähdeck 12 anzubringen, wird die Kante bzw. der Sitz bzw. das Haltemittel 372 des Flanschbereichs 334 unterhalb des Kopfbereichs 358 des Paars von Stiftelementen oder Halteelementen 344 eingesetzt und dann wird das Haltemittel 342 in dem Flanschbereich 334 über dem Stift 360 angeordnet, und der Federring 364 wird in die Öffnung 362 in dem Schaft 360 eingesetzt. Ein Entfernen erfordert einfach den umgekehrten Vorgang.

Die Abdeckelemente 28, 128, 228, 328 sind vorzugsweise mit einem niedrigen Profil vorgesehen, derart, daß sie sich nur über die Riemenscheiben 18 und den Riemen 22 erstrecken, wodurch die Menge an Raum, die zwischen dem verschwenkbaren Rahmenzusammenbau und der Oberseite der Abdeckung 20 benötigt wird, minimiert wird. Dies wiederum stellt einen zusätzlichen vertikalen Bewegungsbereich, durch den das Mähdeck 12 unter den Rahmenzusammenbau bewegt werden kann, und so eine größere Tiefe für die Schnitteinstellung des Mähgeräts 10 zur Verfügung.

Die Abdeckelemente 28, 128, 228, 328 können einfach angebracht und/oder entfernt werden, wenn Instandhaltungsarbeiten an den Spindeln, den Schneidblättern und/oder den Riemen 22 benötigt werden. Wie es in den Figuren dargestellt wird, erfordert das Entfernen der Abdeckelemente 28, 128, 228, 328, außer bei dem Ausführungsbeispiel aus Figur 7, welches ein federndes Sicherungsmittel 248 vorsieht, einfach ein Entfernen des Federrings 64, 164, 364 von dem Schaft 60, 160, 360 und eine sich in Längsrichtung erstreckende oder drehende Bewegung des Abdeckelements 28, 128, 228, 328, um es den Kopfbereichen 58, 158, 258, 358, der abstehenden Halteelemente 44, 144, 244, 344 zu erlauben, aus den Haltemitteln 40, 42, 140, 142, 240, 242, 342, 372 entfernt zu werden und es so zu erlauben, daß das Abdeckelement 28, 128, 228, 328 von dem Mähdeck 12 abgehoben und entfernt wird.

Durch die vorliegende Erfindung wird ein aus Kunststoffverbundwerkstoff bestehendes und haltbares Abdeckelement 28, 128, 228, 328 vorgesehen, welches einfach und schnell auf einer Vielzahl von Mähdeckausführungen angebracht werden kann. Für den Anbau und/oder die Entfernung der Abdeckelemente 28, 128, 228, 328 werden keine Werkzeuge benötigt, wodurch die Zeit und der Aufwand, der für Instandhaltungsarbeiten, die für die Riemenscheiben 18 und/oder Riemens 22 des Mähdecks 12 notwendig sein können, minimiert wird.

## Patentansprüche

1. Mähdeck, vorzugsweise ein Sichelmähdeck, mit einer Abdeckung (20) mit einem oder mehreren Halteelement(en) (44, 46, 144, 146, 244, 246, 344, 346) und mit zumindest einem auf die Abdeckung (20) aufsetzbaren Abdeckelement (28, 128, 228, 328) mit einem oder mehreren, mit dem/den Halteelement(en) (44, 46, 144, 146, 244, 246, 344, 346) korrespondierenden Haltemittel(n) (40, 42, 140, 142, 240, 242, 342, 372), dadurch gekennzeichnet, daß das/die Haltemittel (40, 42, 140, 142, 240, 242, 342, 372) und das/die Halteelement(e) (44, 46, 144, 146, 244, 246, 344, 346) mit dem Abdeckelement (28, 128, 228, 328) bzw. der Abdeckung (20) räumlich festgelegt verbunden sind und als ein Paar von Formschlußelementen, die zur Führung des Abdeckelements (28, 128, 228, 328) auf der Abdeckung (20) zumindest in einer ersten Stellung miteinander in Eingriff bringbar sind, und als zumindest zwei weitere Formschlußelemente, zur Festlegung des Abdeckelements (28, 128, 228, 328) auf der Abdeckung (20) in zumindest einer zweiten Stellung, ausgebildet sind.

2. Mähdeck nach Anspruch 1, dadurch gekennzeichnet, daß die Haltemittel (40, 42, 140, 142, 240, 242, 342, 372) und die Halteelemente (44, 46, 144, 146, 244, 246, 344, 346) zumindest teilweise wenigstens annähernd gleichmäßig beabstandet sind.

3. Mähdeck nach einem oder mehreren der vorherigen Ansprüche, dadurch gekennzeichnet, daß das/die Haltemittel (40, 42, 140, 142, 240, 242, 342, 372) und/oder das/die Halteelemente (44, 46, 144, 146, 244, 246, 344, 346) als von der Abdeckung (20) bzw. dem Abdeckelement (28, 128, 228, 328) abstehende Stiftelemente vorzugsweise mit einem Schaft oder mit einem Schaft und einem Kopfbereich, als Ausnehmungen oder als Aussparungen ausgebildet sind.

4. Mähdeck nach einem oder mehreren der vorherigen Ansprüche, dadurch gekennzeichnet, daß das Abdeckelement (28, 128, 228, 328) einen vorzugsweise wenigstens annähernd eben ausgebildeten zentralen Bereich (30, 130, 230, 330) und/oder einen dazu zumindest im wesentlichen senkrecht angeordneten Wandbereich (32, 132, 232, 332) aufweist.

5. Mähdeck nach Anspruch 4, dadurch gekennzeichnet, daß das/die Haltemittel (40, 42, 140, 142, 240, 242, 342, 372) in dem Wandbereich (32, 132, 232, 332) oder in einem an den Wandbereich (32, 132, 232, 332) anschließenden Flanschbereich (34, 134, 234, 334) angeordnet ist/sind.

6. Mähdeck nach einem oder mehreren der vorherigen Ansprüche, dadurch gekennzeichnet, daß das Abdeckelement (28, 128, 228, 328) zumindest bereichsweise rund ist.

7. Mähdeck nach einem oder mehreren der vorherigen Ansprüche, dadurch gekennzeichnet, daß das Abdeckelement (28, 128, 228, 328) in seinem zentralen Bereich (30, 130, 230, 330) zumindest eine Ausnehmung (36, 136, 236, 336) aufweist.

8. Mähdeck nach einem oder mehreren der vorherigen Ansprüche gekennzeichnet durch ein Abdeckelement (28, 128, 228, 328) bestehend aus einem flexiblen Material, vorzugsweise einem Kunststoff.

9. Abdeckelement ausgebildet zur Verwendung an einem Mähdeck nach einem oder mehreren der vorherigen Ansprüche.
